Europäisches Patentamt

European Patent Office

Office européen des brevets

(11) Veröffentlichungsnummer : **0 119 408 B1**

# EUROPÄISCHE PATENTSCHRIFT

(45) Veröffentlichungstag der Patentschrift :
04.05.88

(51) Int. Cl.⁴ : **H 01 S   3/03**

(21) Anmeldenummer : **84100775.0**

(22) Anmeldetag : **25.01.84**

(54) **Gaslaser und Verfahren zu seiner Herstellung.**

(30) Priorität : **17.02.83 DE 3305462**

(43) Veröffentlichungstag der Anmeldung :
**26.09.84 Patentblatt 84/39**

(45) Bekanntmachung des Hinweises auf die Patenterteilung : **04.05.88 Patentblatt 88/18**

(84) Benannte Vertragsstaaten :
**BE CH DE FR GB IT LI NL SE**

(56) Entgegenhaltungen :
**US-A- 4 063 803**
**US-A- 4 064 466**
**US-A- 4 349 908**
**SOV. J. OPT. TECHNOL., Band 41, Nr. 7, Juli 1974, Seiten 397-399, American Institute of Physics, New York, US; YU. G. ZAKHARENKO u.a.: "On reducing the mechanical stresses in windows mounted at the Brewster angle"**

(73) Patentinhaber : **Siemens Aktiengesellschaft Berlin und München**
**Wittelsbacherplatz 2**
**D-8000 München 2 (DE)**

(72) Erfinder : **Schmid, Rudolf**
**Röntgenstrasse 36**
**D-8012 Ottobrunn (DE)**

## Beschreibung

Die Erfindung betrifft einen Gaslaser gemäß dem Oberbegriff des Anspruchs 1 sowie ein Verfahren zur Herstellung eines Gaslasers gemäß Anspruch 9. Ein solcher Laser ist aus US-A-40 63 803 bekannt.

In vielen Fällen kommt man nicht umhin, für die Laserröhre und ihre optischen Abschlüsse jeweils Materialien zu verwenden, die in ihrem thermischen Ausdehnungsverhalten stark voneinander abweichen. So bestehen Brewster-Fenster gewöhnlich aus Quarz, weil dieser Werkstoff von Hause aus hochtransparent ist, auch nach einem längeren Betrieb praktisch keine Verunreinigungen aufnimmt und sich überdies ohne allzu großen Aufwand glätten läßt. Für den Röhrenmantel oder die Kapillare bevorzugt man dagegen bestimmte Glassorten, die sich leichter verarbeiten lassen und vor allem auch He-dicht sind. Diese Gläser haben einen thermischen Ausdehnungskoeffizienten $\chi$, der im allgemeinen zwischen $35 \times 10^{-7} \, K^{-1}$ (Hartglas auf Borsilikatbasis) und $95 \times 10^{-7} \, K^{-1}$ (Weichglas mit Bleioxidzusatz) liegt. Sie sind damit an Quarz mit seinem extrem geringen $\chi$-Wert von höchstens $5 \times 10^{-7} \, K^{-1}$ thermisch nicht angepaßt, d. h., man bringt keine Glaslot- oder Schmelzverbindungen zustande, die den Gasraum des Lasers zuverlässig abdichten könnte.

Eine solche Fehlanpassung wäre an sich unkritisch, wenn die optischen Abschlüsse mit einem Epoxidharz an der Röhre fixiert werden (US-A-33 90 351). Organische Kleber benötigen relativ geringe Prozeßtemperaturen und sind auch noch im ausgehärteten Zustand durchaus elastisch.

Sie begrenzen allerdings die Lebensdauer des Lasers, weil sie nicht völlig undurchlässig sind, keine hohen Ausheiztemperaturen zulassen und zudem fortlaufend eigene Bestandteile in den Gasraum abgeben.

Deshalb haben sich die meisten Gaslaser-Hersteller schon vor einigen Jahren für eine Glaslottechnik entschieden und im Laufe der Zeit verschiedene Konzepte entwickelt, um die Lotverbindung thermisch zu entlasten. Zunächst dachte man daran, die optischen Abschlußelemente in biegsamen Metallfassungen zu haltern (vgl. hierzu die eingangs zitierte Patentschrift oder US-A-35 55 450). Dieser Gedanke hat sich allerdings in der Praxis nicht durchgesetzt, denn man konnte nicht ausschließen, daß die Lotverbindung unter den hitzebedingten Spannungen abriß oder die Abschlußelemente durch das sich verformende Metall dejustiert wurden.

Üblich ist heutzutage eine abgestufte Verbindung mit mehreren Zwischenstücken, die ebenso formfest sind wie die Röhre und das Abschlußelement und beider $\chi$-Werte in zulässigen Sprüngen ineinander überführen. Diese Methode liefert einwandfreie Resultate, ist aber umständlich und teuer. So enthält etwa ein im Handel befindlicher 25 mW-HeNe-Laser, bei dem eine Hartglas-Kapillare mit einem Quarz-Fenster kombiniert ist, vier verschiedene Zwischengläser (Modell « 107 » von Spectra-Physics).

Ausgehend von diesem Stand der Technik liegt der Erfindung die Aufgabe zugrunde, eine Laser-Röhre aus einem vorgegebenen Material mit einem transparenten Element abzuschließen, das seine Funktionen voll erfüllt und darüber hinaus auf einfache Weise mit der Röhre vakuumdicht verbunden werden kann. Diese Aufgabe wird erfindungsgemäß durch einen Gaslaser mit den Merkmalen des Patentanspruchs 1 gelöst.

Die Erfindung beruht auf Versuchsergebnissen, die zunächst an quarzbeschichteten Glasträgern gewonnen wurden. Im Rahmen dieser Experimente hat sich herausgestellt, daß der gesamte Körper dann, wenn man die Schicht unter einheitlichen Bedingungen in einer Dicke von einigen Zehnteln einer Laserwellenlänge aufträgt, über folgende Eingenschaften verfügt :

1) Sein $\chi$-Wert entspricht dem des Trägers ; man kann also mit gängigen Glasloten und beherrschbaren Löttechniken arbeiten.

2) Die Schicht verträgt lasertypische Temperaturbelastungen, obwohl sie dabei den Dehn- und Schrumpfbewegungen ihres Substrates folgen muß.

3) Die Schichtoberfläche ist praktisch genauso plan wie die Oberfläche ihrer Unterlage ; dementsprechend genügt es, die Trägerplatte mit der gewohnten Sorgfalt zu polieren.

4) Der Brechungsindex n der Schicht ist überall konstant und weicht gewöhnlich von dem n-Wert einer massiven Platte aus gleichem Material etwas ab. Bei einem Brewsterfenster kommt man praktisch immer zu hervorragenden Polarisations- und Reflexionsverhältnissen, wenn man sich an den für den Träger optimalen Neigungswinkel hält.

5) Die Schicht ist genauso lichtdurchlässig und resistent gegen Oberflächenkontaminierungen wie ein Körper, der aus dem gleichen Material besteht und die gleiche Oberflächengüte wie der Schichtenträger hat.

Für die Beschichtung der Trägerplatte kommen vor allem die Sputter- und die CVD (chemical-vapor-deposition-)-Technik in Frage ; denkbar ist aber auch ein Aufdampfverfahren. Die Schichtdicken sollten zwischen 0,07 µm und 0,5 µm, insbesondere zwischen 0,1 µm und 0,3 µm, liegen.

Die thermischen Ausdehnungskoeffizienten von Schicht und Träger, $\chi_2$ und $\chi_3$, können ohne weiteres um mehr als $100 \times 10^{-7} \, K^{-1}$ differieren. Bei den bevorzugten Materialpaarungen — Quarz auf Glas — liegen die $\chi$-Differenzen generell über $25 \times 10^{-7} \, K^{-1}$, häufig über $40 \times 10^{-7} \, K^{-1}$ und nicht selten über $65 \times 10^{-7} \, K^{-1}$. Die Trägerplatte sollte zumindest dann aus Weichglas bestehen, wenn es auf eine besonders feste Verbindung ankommt, denn Weichglas ist thermisch kompatibel mit ausgezeichnet haftenden Glasloten.

Quarz/(Weich-)Glas-Fenster bieten sich vor allem für HeNe-Laser hoher Leistung an, weil sie hier noch einen weiteren Vorteil bieten : Die HeNe-Mischung erzeugt auch IR-Laserlicht, das Quarz durchsetzen kann und deshalb eigens unterdrückt werden muß, damit die genutzte Laserlinie ihre volle Stärke erhält. Dementsprechend ist etwa bei der bereits erwähnten Lasertype « 107 » von Spectra-Physics die Kapillare auf ihrer gesamten Länge von einem inhomogenen Magnetfeld umgeben. Derart aufwendige Maßnahmen sind bei Verwendung eines quarzvergüteten Glasfensters nicht erforderlich, weil Glas im Infraroten absorbiert.

Weitere vorteilhafte Ausgestaltungen und Weiterbildungen der Erfindung sind Gegenstand zusätzlicher Ansprüche.

Der Lösungsvorschlag soll nun anhand eines bevorzugten Ausführungsbeispiels, das in der beigefügten Zeichnung mit allen wesentlichen Einzelheiten dargestellt ist, näher erläutert werden. In den Figuren sind einander entsprechende Teile mit gleichen Bezugszeichen versehen. Es zeigen :

Fig. 1 eine Laserröhre in einem Seitenschnitt und

Fig. 2 von der Röhre der Fig. 1 einen der beiden Endabschnitte.

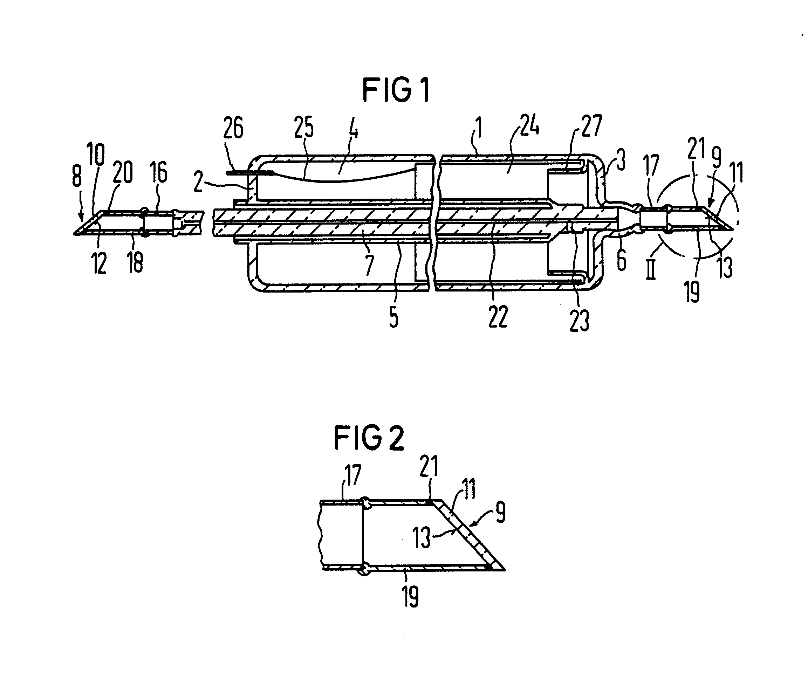

Die dargestellte Laserröhre gehört zu einem 25 mW-HeNe-Gaslaser. Sie enthält im einzelnen einen zylindrischen Mantel 1, der stirnseitig jeweils durch eine Endplatte 2, 3 abgeschlossen wird ; dieser Hohlkörper definiert einen Raum 4. Die Platte 2 wird von einem Rohr (Fixierrohr 5) durchsetzt, das weit in den Raum 4 hineinragt. Der Endplatte 3 ist ein nach außen weisender, rohrförmiger Stutzen 6 mit kalibriertem Innendurchmesser angeformt. Eine Kapillare 7 ist berührungsfrei durch das Fixierrohr 5 in das Innere des Hohlkörpers eingeschoben und ruht mit ihrem einen Ende paßgenau im Stutzen 6. Alle Teile sind, wie der Fig. 1 zu entnehmen, zu einem einteiligen, rotationssymmetrischen Körper zusammengefügt.

Die Kapillare 7 und der Stutzen 6 werden nach außen jeweils durch ein Brewsterfenster 8, 9 verschlossen. Beide Brewsterfenster bestehen, wie am besten aus der Fig. 2 zu erkennen, jeweils aus einer Trägerplatte 10, 11, die innenseitig mit je einer Schicht 12, 13 überzogen ist. Die Trägerplatten sind an die Kapillare und den Stutzen thermisch nicht angepaßt. Deshalb sind jeweils Übergangsstücke, nämlich Ringe 16, 17 und als Trägerende dienende Röhrchen 18, 19 dazwischengesetzt. Die Röhrchen sind mit einem Winkel $\alpha = 56°40'$ angeschnitten und über ein Glaslot 20, 21 mit den Brewster-Fenstern 8 bzw. 9 hermetisch dicht verbunden.

Die Kapillare 7 hat eine Bohrung 22, die über eine Öffnung 23 mit dem Raum 4 kommuniziert. In diesem Raum befindet sich eine hohle Kaltkathode 24, die über eine Zuleitung 25 mit einer in die Endplatte 2 eingesetzten Durchführung 26 elektrisch verbunden ist. Die Öffnung 23 ist vor Verunreinigungen aus der Kaltkathode 24 durch eine vom Mantel 1 ausgehende Schutzglocke 27 abgeschirmt. Bei Betrieb der Röhre brennt zwischen der Kathode und dem als Anode wirkenden Metallring 16 eine Gasentladung.

Der aus den Teilen 1 bis 7 gebildete Körper besteht aus einem Hartglas, das von der Firma Schott unter der Bezeichnung « 8250 » angeboten wird und einen thermischen Ausdehnungskoeffizienten $\chi$ von $49 \times 10^{-7} K^{-1}$ hat. Dieser Glastyp ist mechanisch und thermisch hochbelastbar. Die Trägerplatten 10, 11 und die Röhrchen 18, 19 bestehen aus dem Weichglas « GW » von Schott, das einen $\chi$-Wert von $95 \times 10^{-7} K^{-1}$ hat und sich besonders gut schleifen und verlöten läßt. Das Glaslot ist ein von Schott unter der Bezeichnung « G 017/292 » beziehbares Weichlot, das zu der Glastype « GW » paßt und die zu verbindenden Oberflächen einwandfrei benetzt. Die Schichten 12 und 13 bestehen aus einem bis zu einer Stärke von ca. 0,1 µm aufgesputerten Quarz. Als Kathodenwerkstoff wurde Zirkon gewählt. Der vakuumdicht verschlossene Raum ist mit einer HeNe-Mischung von 2,6 mbar gefüllt, die Gasentladung wird mit einer Spannung von 12 kV gezündet und mit 4 kV aufrechterhalten.

Berechnungen haben gezeigt, daß bei einem Brewster-Fenster die Reflexions- und Polarisationsverhältnisse durch die Schicht überraschend wenig beeinflußt werden. Geht man von einer Wellenlänge von 632 nm, einem Einfallswinkel $\alpha$ von 56,6°, einem n-Wert von 1,457 für die Schicht und einem n-Wert von 1,520 für den Träger aus und variiert man die Schichtdicke d zwischen 0 und 1 000 nm, so schwankt der Reflexionsfaktor Rp für Licht, das in der Einfallsebene schwingt, zwischen 0 und 0,52 ‰ ; das erste Minimum liegt dabei bei d = 260 nm. Ändert man neben d auch $\alpha$, so bleibt der Rp-Wert bei $\alpha$-Abweichungen zwischen + 1° und — 3° von 56,6° stets unter 1 ‰. Interferenzeffekte spielen also keine nennenswerte Rolle.

Neben der dargestellten Ausführungsform könnte das Brewster-Fenster, wenn es allerhöchsten Ansprüchen genügen soll, auch beidseitig beschichtet werden. Außerdem ließe sich das Abschlußelement unter Umständen auch auf andere Weise als durch ein Glaslot, etwa durch eine direkte Schmelz- oder Diffusionsverbindung, an der Röhre befestigen. Im übrigen hat man auch bei der Materialauswahl noch einen erheblichen Spielraum. So steht noch eine Vielzahl von geeigneten Gläsern und Glasloten, von denen einige in DE-A-26 03 267 und DE-A-26 04 740 beschrieben werden, zur Verfügung, und ggf. kann man von Glas und Quarz abgehen und für die Schicht oder die Trägerplatte z. B. auch Glimmer und/oder für das Röhrenende eine (Oxid-)Keramik wie BeO oder $Al_2O_3$ nehmen. Normalerweise wird dabei der $\chi$-Wert der Schicht kleiner sein als der des Trägers und des Röhrenendes ; dies ist aber nicht zwingend.

**Patentansprüche**

1. Gaslaser mit folgenden Merkmalen :

a) eine gasgefüllte Röhre ist zumindest an einem ihrer beiden Enden mit einem plattenförmigen, insbesondere unter dem Brewsterwinkel geneigten Fenster hermetisch dicht abgeschlossen,

b) die Röhre besteht wenigstens an ihrem dem Fenster zugewandten Trägerende aus einem ersten Werkstoff mit einem thermischen Ausdehnungskoeffizienten $\chi_1$,

c) das Fenster besteht wenigstens auf seiner dem Trägerende zugewandten Seite, d. h. der Innenseite aus einem zweiten Werkstoff mit einem thermischen Ausdehnungskoeffizienten $\chi_2$,

d) beide Werkstoffe sind thermisch nicht aneinander angepaßt, d. h.

$$\Delta\chi = |\chi_1 - \chi_2| > 10 \times 10^{-7}\,K^{-1},$$

dadurch gekennzeichnet, daß

e) das Fenster (8, 9) eine Trägerplatte (10, 11) enthält, die aus einem thermisch an den ersten Werkstoff angepaßten dritten Werkstoff mit einem thermischen Ausdehnungskoeffizienten $\chi_3$ besteht und

f) auf ihrer Innenseite mit einer aus dem zweiten Werkstoff bestehenden Schicht (12, 13) überzogen ist.

2. Gaslaser nach Anspruch 1, dadurch gekennzeichnet, daß die Schicht (12, 13) zwischen 0,07 $\mu$m und 0,5 $\mu$m, insbesondere zwischen 0,1 $\mu$m und 0,3 $\mu$m, dick ist.

3. Gaslaser nach den Ansprüchen 1 oder 2, dadurch gekennzeichnet, daß die Trägerplatte (10, 11) auch auf ihrer Außenseite mit dem zweiten Werkstoff beschichtet ist.

4. Gaslaser nach einem der Ansprüche 1 bis 3, dadurch gekennzeichnet, daß auch die Trägerplatte (10, 11) aus dem ersten Werkstoff besteht.

5. Gaslaser nach einem der Ansprüche 1 bis 4, dadurch gekennzeichnet, daß das Fenster (8, 9) mit dem ihm zugewandten Trägerende (Röhrchen 18, 19) über ein Glaslot (20, 21) verbunden ist.

6. Gaslaser nach einem der Ansprüche 1 bis 5, dadurch gekennzeichnet, daß gilt : $25 \times 10^{-7}\,K^{-1} \leqslant \Delta\chi \leqslant 140 \times 10^{-7}\,K^{-1}$, insbesondere $40 \times 10^{-7}\,K^{-1} \leqslant \Delta\chi \leqslant 110 \times 10^{-7}\,K^{-1}$ und vorzugsweise $65 \times 10^{-7}\,K^{-1} \leqslant \Delta\chi \leqslant 95 \times 10^{-7}\,K^{-1}$.

7. Gaslaser nach einem der Ansprüche 1 bis 6, dadurch gekennzeichnet, daß der erste Werkstoff Glas, insbesondere Hartglas ($45 \times 10^{-7}\,K^{-1} \leqslant \chi_1 \leqslant 60 \times 10^{-7}\,K^{-1}$) oder Weichglas ($70 \times 10^{-7}\,K^{-1} \leqslant \chi_1 \leqslant 100 \times 10^{-7}\,K^{-1}$), ist.

8. Gaslaser nach einem der Ansprüche 1 bis 7, dadurch gekennzeichnet, daß der zweite Werkstoff aus Quarz bestehen.

9. Verfahren zur Herstellung eines Gaslasers nach einem der Ansprüche 1 bis 8, dadurch gekennzeichnet, daß die Schicht (12, 13) auf die fertig polierte Trägerplatte (10, 11) aufgesputtert, aufgedampft oder in einem CVD-Verfahren aufgebracht wird und daß mit dieser Einheit anschließend die Laserröhre hermetisch dicht abgeschlossen wird.

## Claims

1. A gas laser having the following features :

a) a gas filled tube hermetically sealed at least at one of its two ends by a plate-shaped window inclined particularly at the Brewster angle,

b) the tube consists, at least at its carrier end which is towards the window, of a first material having a thermal coefficient of expansion of $\ell_1$

c) the window consists, at least on its side which is towards the carrier end, i.e. the inside, of a second material having a thermal coefficient of expansion of $\ell_2$,

d) neither material is thermally adapted to the other, i.e.

$$\Delta\ell = |\ell_1 - \ell_2| > 10 \times 10^{-7}\,K^{-1}$$

characterised in that,

e) the window (8, 9) contains a carrier plate (10, 11) which consists of a third material which is thermally matched to the first material and which has a thermal coefficient of expansion of $\ell_3$, and

f) is coated on its inside face with a coating (12, 13) which consists of the second material.

2. A gas laser according to Claim 1, characterised in that the coating (12, 13) thickness is between 0.07 $\mu$m und 0.5 $\mu$m, and is in particular between 0.1 $\mu$m and 0.3 $\mu$m.

3. A gas laser according to Claim 1 or 2, characterised in that the carrier plate (10, 11) is also coated with the second material on its outside surface.

4. A gas laser according to one of Claims 1 to 3, characterised in that the carrier plate (10, 11) consists of the first material.

5. A gas laser according to one of Claims 1 to 4, characterised in that the window (8, 9) is connected by a glass solder (20, 21) to the carrier (little tube 18, 19) which is towards it.

6. A gas laser according to one of claims 1 to 5, characterised in that $25 \times 10^{-7}\,K^{-1} \leqslant \Delta\ell \leqslant 140 \times 10^{-7}\,K^{-1}$, particularly $40 \times 10^{-7}\,K^{-1} \leqslant \Delta\ell \leqslant 110 \times 10^{-7}\,K^{-1}$, and preferably $65 \times 10^{-7}\,K^{-1} \leqslant \Delta\ell \leqslant 95 \times 10^{-7}\,K^{-1}$.

7. A gas laser according to one of Claims 1 to 6, characterised in that the first material is glass, particularly hard glass ($45 \times 10^{-7}\,K^{-1} \leqslant \ell_1 \leqslant 60 \times 10^{-7}\,K^{-1}$) or is soft glass ($70 \times 10^{-7}\,K^{-1} \leqslant \ell_1 \leqslant 100 \times 10^{-7}\,K^{-1}$).

8. A gas laser according to one of Claims 1 to 7, characterised in that the second material consists of quartz.

9. A method of manufacturing a glass laser according to one of Claims 1 to 8, characterised in that the step (12, 13) is sputtered, deposited by vapour or applied by a CVD method to the completely polished carrier plate (10, 11), an in that the laser tube is hermetically sealed afterwards by this unit.

## Revendications

1. Laser à gaz ayant les caractéristiques suivantes :

a) un tube empli de gaz et fermé hermétiquement d'une manière étanche au moins à l'une de ses deux extrémités par une fenêtre en forme de plaque inclinée notamment sous l'angle de Brewster,

b) le tube est, au moins à son extrémité formant support et tournée vers la fenêtre, en un premier matériau ayant un coefficient de dilatation thermique $\chi_1$,

c) la fenêtre est, au moins du côté tourné vers l'extrémité formant support, c'est-à-dire du côté intérieur, en un deuxième matériau ayant un coefficient de dilatation thermique $\chi_2$,

d) les deux matériaux ne sont pas adaptés l'un à l'autre thermiquement, c'est-à-dire

$$\Delta\chi = |\chi_1 - \chi_2| > 10 \times 10^{-7}\,K^{-1},$$

caractérisé en ce que

e) la fenêtre (8, 9) comporte une plaque support (10, 11) qui est en un troisième matériau adapté thermiquement au premier matériau et ayant un coefficient de dilatation thermique $\chi_3$, et

f) qui est revêtu, du côté intérieur, d'une couche (12, 13) en le deuxième matériau.

2. Laser à gaz suivant la revendication 1, caractérisé en ce que la couche (12, 13) a une épaisseur comprise entre 0,07 micron et 0,5 micron, notamment comprise entre 0,1 micron et 0,3 micron.

3. Laser à gaz suivant la revendication 1 ou 2, caractérisé en ce que la plaque support (10, 11) est revêtue également, du côté extérieur, du deuxième matériau.

4. Laser à gaz suivant l'une des revendications 1 à 3, caractérisé en ce que la plaque support (10, 11) est également en le premier matériau.

5. Laser à gaz suivant l'une des revendications 1 à 4, caractérisé en ce que la fenêtre (8, 9) est reliée à l'extrémité du support qui est tournée vers elle (petits tubes 18, 19) par une brasure de verre (20, 21).

6. Laser à gaz suivant l'une des revendications 1 à 5, caractérisé en ce que $25 \times 10^{-7}\,K^{-1} \leq \Delta\chi \leq 140 \times 10^{-7}\,K^{-1}$, et notamment $40 \times 10^{-7}\,K^{-1} \leq \Delta\chi \leq 110 \times 10^{-7}\,K^{-1}$ et de préférence $65 \times 10^{-7}\,K^{-1} \leq \Delta\chi \leq 95 \times 10^{-7}\,K^{-1}$.

7. Laser à gaz suivant l'une des revendications 1 à 6, caractérisé en ce que le premier matériau est du verre, notamment du verre dur $(45 \times 10^{-7}\,K^{-1} \leq \chi_1 \leq 60 \times 10^{-7}\,K^{-1})$ ou du verre tendre $(70 \times 10^{-7}\,K^{-1} \leq \chi_1 \leq 100 \times 10^{-7}\,K^{-1})$.

8. Laser à gaz suivant l'une des revendications 1 à 7, caractérisé en ce que le deuxième matériau est en quartz.

9. Procédé de fabrication d'un laser à gaz suivant l'une des revendications 1 à 8, caractérisé en ce qu'il consiste à appliquer la couche (12, 13) par pulvérisation cathodique, par dépôt en phase vapeur ou par un procédé CVD, sur la plaque support (10, 11) finie et polie, et ensuite à fermer le tube laser d'une manière hermétiquement étanche par cette unité.

0 1 1 9 408

# FIG 1

# FIG 2

1